# EUROPÄISCHE PATENTSCHRIFT

(11) **EP 2 609 342 B1**
(45) Veröffentlichungstag und Bekanntmachung des Hinweises auf die Patenterteilung: **11.05.2016**
(21) Anmeldenummer: 11749159.7
(22) Anmeldetag: 23.08.2011
(51) Int. Cl.: F16B 19/08, F16B 25/00

(54) **BEFESTIGUNGSELEMENT**
FASTENING ELEMENT
ÉLÉMENT DE FIXATION

(30) Priorität: 24.08.2010 DE 102010039659
(43) Veröffentlichungstag der Anmeldung: 03.07.2013
(73) Patentinhaber: Adolf Würth GmbH & Co. KG, 74653 Künzelsau (DE); Würth International AG, 7004 Chur (CH)
(72) Erfinder: FRANK, Uwe, 74629 Pfedelbach-Windischenbach (DE)
(74) Vertreter: Patentanwälte Ruff, Wilhelm, Beier, Dauster & Partner mbB
(86) Internationale Anmeldenummer: PCT/EP2011/064470
(87) Internationale Veröffentlichungsnummer: WO 2012/025526

(56) Entgegenhaltungen:
- WO-A1-96/19675
- DE-A1-102008 014 840
- JP-U- 54 134 865
- US-A- 1 097 669

## Beschreibung

Die Erfindung betrifft ein Befestigungselement, das in einer ruckartigen Bewegung in einen nicht gelochten Untergrund eingetrieben wird.

Es ist bereits ein Schussniet bekannt, der mithilfe eines Schussgeräts in ein nicht gelochtes Werkstück eingetrieben wird. Dieser Nietdorn weist an seinem dem Werkstück zugewandten Ende eine Spitze auf, die auch pyramidenförmig ausgebildet sein kann (EP 1085952). Eine solche, bei Schussnieten übliche Spitze erleichtert das Eindringen in das nicht gelochte Werkstück.

Es hat sich jedoch herausgestellt, dass bei bestimmten Anwendungsfällen die durch eine solche Spitze erzeugte Verformung des Werkstücks im Bereich der Befestigungsstelle zu ungeeigneten Ergebnissen führt.

Es ist bereits eine Stanzeinrichtung bekannt, bei der der Stanzstempel die Form eines schräg abgeschnittenen Zylinders mit einer dadurch gebildeten Spitze und einer Trennschulter beim Übergang zu der Zylinderform aufweist. Die Trennschulter soll den gestanzten Teil abtrennen (US 1097669 A).

Ebenfalls bekannt ist eine loch- und gewindeformende Schraube mit einer kegelförmigen Spitze, an die sich eine achsparallel verlaufende Querschnittsverringerung über einen Teilbereich der Länge ihres Endabschnitts anschließt (WO 96/19675 A1).

Bei einem weiteren Befestigungselement ist ein Stanzabschnitt vorgesehen, der in einer leicht schräg verlaufenden ebenen Stirnfläche mit einer umlaufenden Stanzkante endet. Damit soll erreicht werden, dass der Stanzvorgang längs des Umfangs nicht gleichzeitig stattfindet (DE 10 2008 014 840 A1).

Der Erfindung liegt die Aufgabe zu Grunde, ein zum Eintreiben in ein nicht gelochtes Werkstück geeignetes Befestigungselement zu schaffen, das bei einfachem Aufbau zu einer geringeren Verformung des Werkstücks im Bereich der durch das Befestigungselement bewirkten Befestigung führt.

Zur Lösung dieser Aufgabe schlägt die Erfindung ein Befestigungselement mit den im Anspruch 1 genannten Merkmalen vor. Weiterbildungen der Erfindung sind Gegenstand von Unteransprüchen.

Das Befestigungselement enthält also im Bereich seines vorderen, dem Werkstück zugewandten Endes als Spitze einen Stanzabschnitt mit einer Stirnfläche, die von einer Umfangskante begrenzt ist. Diese Stirnfläche und damit auch die sie eingrenzende Umfangskante liegt nun nicht in einer Ebene, die senkrecht zur Längsachse verläuft. Dies führt dazu, dass die Stirnfläche zunächst an einer Stelle mit ihrer Umfangskante auf das Werkstück trifft, so dass dort die Öffnung des Werkstücks an einer Stelle beginnt. Beim weiteren Eindringen dieses Stanzabschnitts kommen nach und nach alle Stellen der Umfangskante mit dem Werkstück in Berührung, so dass die Öffnung ähnlich wie bei einem Abscheren nach und nach erzeugt wird. Dies führt dazu, dass einerseits das Werkstück im Bereich der Öffnung weniger stark verformt wird und andererseits keine zu starke Abbremsung des Befestigungselements bewirkt wird. Zusätzlich wird wegen des Abscherens eines Teils des Werkstücks ein Loch mit einem sauberen Rand erzeugt. Ein solcher sauberer Rand neigt nicht zum Einreißen, wie dies bei einem durch eine Spitze erzeugten Loch auftreten kann.

Sobald nun das Loch fast vollständig gebildet ist, trifft der Druckabschnitt der Stanzspitze auf der Oberfläche des Blechs auf und drückt den noch am Blech hängenden Stanzbutzen in der Eintreibrichtung nach vorne, so dass dieser aufgestellt und umgelenkt wird. Da auch der Druckabschnitt der Stanzspitze von der Umfangskante begrenzt wird, greift diese an den Stanzbutzen an und legt den Stanzbutzen in Richtung auf die Rückseite des unteren Blechs um.

Der erwähnte Druckabschnitt der Stanzspitze kann dadurch gebildet werden, dass dieser Bereich der Stirnfläche weniger schräg verläuft als der zunächst auf dem Werkstück auftreffende Stanzabschnitt. Beispielsweise kann der Druckabschnitt unter einem Winkel von etwa 10° gegenüber einer senkrechten Querebene des Befestigungselements verlaufen.

Es kann ebenfalls vorgesehen sein, dass der Druckabschnitt in einer senkrecht zur Längsachse des Befestigungselements verlaufenden Ebene liegt.

Erfindungsgemäß kann vorgesehen sein, dass der Druckabschnitt im Bereich des dem Kopf des Befestigungselements am nächsten liegenden Endes der Stirnfläche einen von dem Kopf des Befestigungselements weg gerichteten kurzen Vorsprung bildet. Wenn dieses Ende der Stirnfläche mit der zugeordneten Umfangskante das Werkstück erreicht, ist der Teil des Werkstücks, der zur Bildung des Lochs abgeschert wird, fast vollständig von dem Werkstück gelöst. Dieser letzte kurze Vorsprung bewirkt ebenfalls ein Umlenken des Stanzbutzens in Richtung auf die Rückseite des Werkstücks.

Der Beginn des Druckabschnitts, oder anders ausgedrückt die Grenze zwischen dem Stanzabschnitt und dem Druckabschnitt der Stanzspitze, kann beispielsweise an einer Stelle liegen, die kleiner oder gleich etwa 25 % des Durchmessers der Stanzfläche beträgt.

Damit auch unter erschwerten Bedingungen ein solches sauberes Loch gestanzt werden kann, **ist** erfindungsgemäß in Weiterbildung vorgesehen, dass die vordere Stanzspitze des Befestigungselements eine zylindrische, insbesondere eine kreiszylindrische, Außenkontur aufweist.

In nochmaliger Weiterbildung der Erfindung ist vorgesehen, dass die Umfangskante von einer Schnittlinie zwischen der Stirnfläche des Befestigungselements und einer zylindrischen Außenkontur des Befestigungselements gebildet wird, vorzugsweise von der zylindrischen Außenkontur der Stanzspitze.

In nochmaliger Weiterbildung der Erfindung kann vorgesehen sein, dass die Stanzspitze einen kleineren Querschnitt aufweist als der eigentliche Körper des Befestigungselements. Es hat sich herausgestellt, dass das Bilden eines Lochs mit einem kleineren Querschnitt als es dem Querschnitt des Befestigungselements entspricht, zu guten Ergebnissen sowohl bei der Ausgestaltung der Befestigung führt als auch dazu, dass der Aufwand zum Eintreiben eines solchen Befestigungselements nicht zu groß wird.

Um dies zu erreichen, kann erfindungsgemäß vorgesehen sein, dass zwischen der vorderen Stanzspitze und dem Befestigungselementkörper ein Übergangsabschnitt angeordnet ist, der den Übergang zwischen dem größeren Querschnitt und dem kleineren Querschnitt herstellt.

Dieser Übergangsabschnitt kann verschiedene Formen aufweisen. Beispielsweise kann der Übergangsabschnitt konisch verlaufen, das heißt mit einer geradlinig verlaufenden Seitenlinie.

Es ist ebenfalls möglich und wird von der Erfindung vorgeschlagen, dass der Übergangsabschnitt ballistisch verläuft, die Seitenlinie also konvex gekrümmt ist.

Eine weitere von der Erfindung vorgeschlagene Möglichkeit liegt darin, dass der Übergangsabschnitt eine konkav gekrümmte Seitenlinie aufweist.

Insbesondere kann auch vorgesehen sein, dass die Seitenlinie des Übergangsabschnitts sich aus Abschnitten unterschiedlicher Konfiguration zusammensetzt, also ballistischen, kegeligen und konkaven Abschnitten.

Der Stanz- und/oder Druckabschnitt kann jeweils eben und jeweils schräg zur Längsachse, insbesondere unter verschiedenen Winkeln, verlaufen.

Die Stirnfläche muss aber nicht eben sein, sie kann auch andere Formen aufweisen. So ist es beispielsweise möglich und wird von der Erfindung vorgeschlagen, dass das vordere Ende der Stanzspitze eine zusätzliche Schneidkante aufweist, die sich über das vordere Ende erstreckt und die Stirnfläche in zwei Teile teilt. Die Schneidkante verläuft von einem Teil der Umfangskante zu dem gegenüberliegenden Abschnitt der Umfangskante, geht also an ihren beiden Enden in die Umfangskante über. Die Stirnfläche kann auf beiden Seiten der Schneidkante auch jeweils eben ausgebildet sein. Dies ist aber nur eine Möglichkeit.

Erfindungsgemäß kann vorgesehen sein, dass diese Schneidkante senkrecht zur Längsachse des Befestigungselements verläuft. Dann beginnt das Herstellen der Öffnung in der Mitte des Stanzbutzens.

Es ist aber ebenfalls möglich und wird von der Erfindung vorgeschlagen, dass diese Schneidkante schräg zur Längsachse des Befestigungselements verläuft.

Sinnvoll ist es, wenn nach einem weiteren Merkmal der Erfindung die Schneidkante durch die Mittelachse des Befestigungselements verläuft.

Erfindungsgemäß kann vorgesehen sein, dass diese Schneidkante eine geradlinige Kante bildet.
Es ist aber ebenfalls möglich und wird von der Erfindung vorgeschlagen, dass diese Schneidkante in einer Seitenansicht des Befestigungselements gebogen ausgebildet ist, wobei in einer Stirnansicht des Befestigungselements die Schneidkante in diesem Fall ebenfalls geradlinig verlaufen soll.
Es kann im Einzelfall auch sinnvoll sein, insbesondere bei größeren Durchmessern, dass das Befestigungselement mehrere derartige Schneidkanten aufweisen kann.
In Stirnansicht gesehen verläuft die Umfangskante längs einer geschlossenen Linie, vorzugsweise einer Kreislinie.
Das Befestigungselement kann beispielsweise als Schussniet ausgebildet sein. Es kann aber auch als Schraube ausgebildet sein, die sich soweit in das Werkstück einschießen lässt, bis in dem Werkstück nach Art eines Durchzugs eine Öffnung gebildet ist, in die das Gewinde der Schraube eingeschraubt werden kann, um sich dort das Gegengewinde zu formen.
Es ist auch denkbar, dass das Befestigungselement umlaufende Rillen aufweist, die kein Gewinde bilden, aber zur verbesserten Festlegung beitragen können.

Weitere Merkmale, Einzelheiten und Vorzüge ergeben sich aus den Ansprüchen der folgenden Beschreibung bevorzugter Ausführungsformen der Erfindung sowie anhand der Zeichnung. Hierbei zeigen:
- Figur 1: die Seitenansicht eines Befestigungselements in Form eines Hohlniets;
- Figur 2: die Seitenansicht des Befestigungselements aus einer anderen Richtung;
- Figur 3: das vordere Ende eines gegenüber der Ausführungsform nach Figur 2 abgeänderten Befestigungselements;
- Figur 4: eine der Figur 3 entsprechende Darstellung einer nochmals geänderten Ausführungsform;
- Figur 5: die Seitenansicht eines Befestigungselements mit einem Übergangsbereich;
- Figur 6: die Seitenansicht des Befestigungselements der Figur 5 aus einer anderen Richtung;
- Figur 7: die perspektivische Ansicht der Ausführungsform nach Figur 5 und 6;
- Figur 8: die Seitenansicht einer dritten Ausführungsform;
- Figur 9: die Seitenansicht der Ausführungsform der Figur 8 aus einer anderen Richtung;
- Figur 10: die perspektivische Ansicht der Ausführungsform nach Figur 8 und 9.

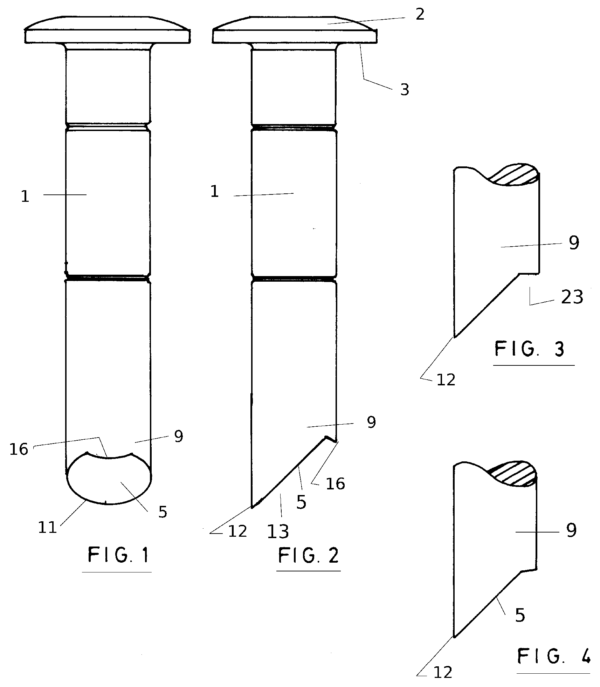

Figur 1 zeigt als Beispiel für ein von der Erfindung vorgeschlagenes Befestigungselement einen Hohlniet mit einem Körper 1, an dessen einem Ende ein Kopf 2 ausgebildet ist. Der Kopf 2 steht radial über den zylindrischen Abschnitt des Körpers 1 vor. Seine Unterseite bildet eine Anlageschulter 3, die in befestigtem Zustand auf der Oberseite des Werkstücks zur Anlage kommt. Im Bereich seines dem Werkstück zugeordneten vorderen Endes 4 weist das Befestigungselement eine Stirnfläche 5 auf, die hier nur angedeutet ist.

Ein zweites Beispiel für die Art von Befestigungselement, bei dem die Erfindung Anwendung finden kann, ist ein Dornbruchniet.

Ein drittes Beispiel für ein Befestigungselement, an dem die Erfindung verwirklicht werden kann, ist eine Stanzschraube

In dem Bereich des vorderen Endes, also des dem Schraubenkopf 2 abgewandten Endes des Befestigungselements, ist eine Stanzspitze 9 gebildet, die von einer schräg verlaufenden Stirnfläche 5 begrenzt wird.

Die Stirnfläche 5 ist eben und verläuft unter einem Winkel von etwa 45° gegenüber der Längsachse des als Hohlniet ausgebildeten Befestigungselements. Die Stanzspitze 9 weist bei dieser Ausführungsform die gleiche Querschnittsform und den gleichen Durchmesser auf wie der zylindrische Abschnitt des Körpers 1 des Hohlniets.

Die Stelle der Stanzspitze 9, die den größten Abstand von der Anlageschulter 3 des Kopfs 2 des Befestigungselements aufweist, bildet eine Spitze 12. Wie man der Figur 1 entnehmen kann, ist die Umfangskante 11 an dieser Stelle natürlich gekrümmt, aber es ist dennoch eine Spitze 12 gebildet. Der sich an diese Spitze 12 anschließende Bereich der Stanzspitze 9 bildet einen Stanzabschnitt 13. Beim Eindringen der Stanzspitze 9 in das Werkstück erfolgt durch die Umfangskante 11 ein Stanzvorgang.

An der Stelle der Stirnfläche 5, die von der führenden Spitze 12 am weitesten entfernt ist, ist ein kurzer nach vorne ragender Vorsprung 16 als Druckabschnitt gebildet. Dieser Vorsprung 16 ist von dem Kopf 2 des Niets weg in Richtung auf das Werkstück gerichtet. Beim Durchdringen eines Werkstücks wird der Stanzbutzen zunächst an der Spitze 12 des Niets gelöst. Kurz bevor der Stanzfleck fast vollständig abgeschert wird, trifft der Vorsprung 16 auf ihn. Er sorgt dafür, dass kurz vor dem vollständigen Durchstoßen der Stanzbutzen nicht abgerissen wird, sondern dass er aufgestellt, zur Seite abgebogen und in Richtung auf die Rückseite des Werkstücks umgelegt wird.

Die Figur 3 zeigt in einer der Figur 2 entsprechenden Darstellung nur den vorderen Bereich des Körpers 1 eines Befestigungselements gemäß einer anderen Ausführungsform. Während bei der Ausführungsform der Figur 1 und 2 der Druckabschnitt der Stanzspitze 9 durch einen in Richtung von dem Kopf 2 des Befestigungselements weg zeigenden Vorsprung 16 gebildet ist, zeigt die Ausführungsform der Figur 3 einen Druckabschnitt 23, der eine senkrecht zur Längsachse verlaufende Stirnfläche aufweist. Bei dieser Ausführungsform trifft gegen Ende des Eintreibvorgangs diese Stirnfläche gleichzeitig auf den Stanzbutzen. Auch damit wird erreicht, dass der Stanzbutzen nicht gelöst, sondern umgefaltet wird.

Die Figur 4 zeigt eine weitere Ausführungsform, bei der der Druckabschnitt 23 eine Stirnfläche aufweist, die in der gleichen Richtung geneigt ist wie die Stirnfläche 5 des Stanzabschnitts 13, aber deutlich näher an der senkrecht zur Längsachse verlaufenden Querebene orientiert ist. Der Winkel, den diese Stirnfläche 23 mit dieser Querebene einschließt, beträgt beispielsweise etwa 10°.

Während bei der Ausführungsform nach Figur 1 bis Figur 4 die Stanzspitze 9 eine zylindrische Fortsetzung des Körpers 1 des Befestigungselements ist, zeigen die folgenden Figuren Ausführungsformen, bei denen zwischen dem Körper 1 des Befestigungselements und der Stanzspitze 9 ein Übergangsabschnitt 10 angeordnet ist. Dieser Übergangsabschnitt 10 führt dazu, dass die Stanzspitze 9 in ihrem Durchmesser beziehungsweise ihrer Querschnittsgröße deutlich kleiner ist als der Durchmesser des Körpers 1 des Befestigungselements. Damit kann erreicht werden, dass das von der Stanzspitze 9 hergestellte Loch kleiner ist, als es dem Durchmesser des Befestigungselementkörpers entspricht. Dies führt dazu, dass der Übergangsabschnitt 10 das gestanzte Loch aufweitet, was zu einer Durchzugbildung in dem Randbereich des Lochs führt. Diese Durchzugbildung kann zu einer verbesserten Haltung des Befestigungselements in dem Randbereich des Blechelements führen.

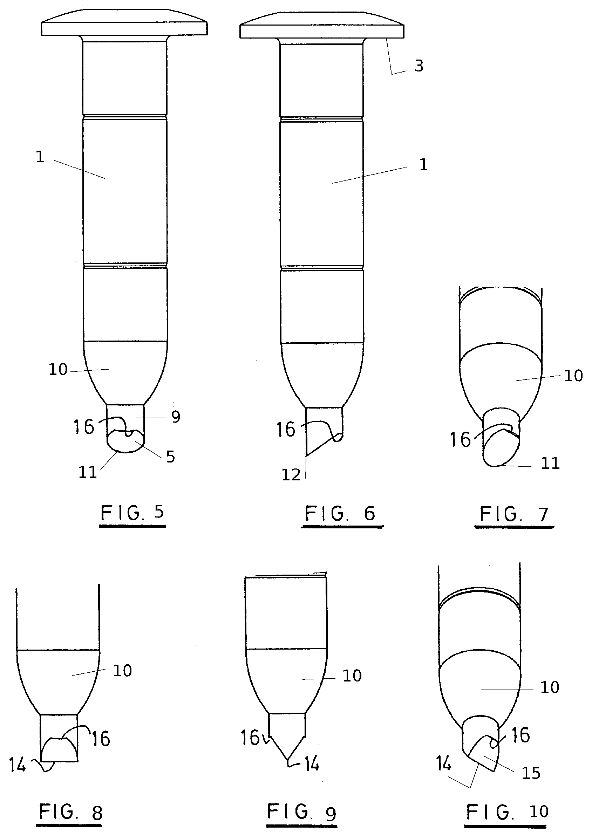

Bei der Ausführungsform der Figur 5 bis Figur 7 weist der vordere Abschnitt der Stanzspitze 9 die gleiche Form auf wie bei der vorhergehenden Ausführungsform nach Figur 1 und Figur 2. Ganz vorne am Stanzabschnitt ist also eine ebene schräg verlaufende Fläche 5 gebildet, die eine umlaufende Stanzkante 11 aufweist. An der Stelle 12, die der Unterseite 3 des Kopfs 2 am nächsten ist, ist der bereits erwähnte, nach vorne gerichtete kurze Vorsprung 16 ausgebildet. Auch hier verläuft die Ebene der Stirnfläche 5 ungefähr unter einem Winkel von 45° gegenüber der Längsachse.

Die Figur 7 zeigt nur den vorderen Bereich des Befestigungselements in einer perspektivischen Darstellung.

In den bisher behandelten Figuren ist die Stirnfläche 5 als ebene Fläche ausgebildet. Sie könnte aber auch als gekrümmte Fläche ausgebildet sein.

Die weitere, in den Figuren 8 bis 10 dargestellte Ausführungsform eines Befestigungselements unterscheidet sich von der Ausführungsform der Figur 5 bis Figur 7 darin, dass am vorderen Ende der Stanzspitze zwei ebene Stirnflächen 15 gebildet sind. Beide Stirnflächen verlaufen etwa unter einem Winkel von 45° gegenüber der Längsachse, so dass sie beide miteinander einen Winkel von etwa 90° einschließen. Die dadurch an dem vorderen Ende der Stanzspitze gebildete Schneidkante 14 verläuft im dargestellten Beispiel senkrecht zur Längsachse. Die beiden Stirnflächen 15 beidseits der Schneidkante 14 sind symmetrisch zueinander angeordnet. Bei dieser Ausführungsform wird der Stanzbutzen zunächst in der Mitte durchstoßen, und dann beidseits der durch die Schneidkante 14 erzeugten Trennungslinie nach und nach abgeschert. Es entstehen dadurch im günstigsten Fall zwei Stanzbutzen, die dann kurz vor dem vollständigen Durchstoßen durch die Vorsprünge 16 umgelenkt werden.

Die in Figur 8 als senkrecht zur Längsachse des Niets dargestellte Schneidkante 14 könnte auch schräg gegenüber der Längsachse des Befestigungselements verlaufen, um dadurch mit dem Durchstoßen am Rand des zu bildenden Lochs zu beginnen. Sie könnte auch mehr oder weniger stark konkav oder konvex gekrümmt sein.

Es wurde bereits erwähnt, dass der Übergangsabschnitt 10 zwischen dem Körper 1 des Befestigungselements und der Stanzspitze 9, 19 dazu dient, den Rand des durch die Stanzspitze 9, 19 erzeugten Lochs umzuformen, um dadurch das Loch zu vergrößern. Die Form des Übergangsabschnitts 10 ist in den dargestellten Ausführungsbeispielen mit einer konvexen Seitenkontur ausgebildet. Stattdessen kann der Übergangsabschnitt auch kegelförmig ausgebildet sein, so dass seine Seitenkontur geradlinig verläuft.

Auch eine konkave Seitenkontur ist sinnvoll.

Je nach den Umständen des Einzelfalls kann auch eine Kombination dieser Formen verwendet werden.

Der Druckabschnitt der Stanzspitze 9 der Ausführungsformen nach den Figuren 5 bis 10 entspricht dem der Ausführungsform nach Figur 1 und 2. Auch bei diesen Ausführungsformen könnte der Druckabschnitt die Form und Anordnung aufweisen, wie bei der Ausführungsform nach Figur 3 und 4. Dies ist aber im einzelnen nicht dargestellt.

## Patentansprüche

1. Befestigungselement zum Eintreiben, mit
1.1 einem Befestigungselementkörper (1), der
1.2 einen Kopf (2) mit einer Anlageschulter (3) an seiner Unterseite aufweist, und mit
1.3 einer das vordere Ende des Befestigungselements bildenden, **eine zylindrische Außenkontur aufweisenden** Stanzspitze (9), die
1.4 eine Stirnfläche (5) aufweist,
1.5 **deren Umfangskante (11) von einer Schnittlinie zwischen der Stirnfläche (5) und der zylindrischen Außenkontur der Stanzspitze (9) gebildet wird,**
**dadurch gekennzeichnet, dass**
1.6 die Stirnfläche (5) einen Stanzabschnitt, der zuerst auf ein Werkstück auftrifft, und
1.7 einen Druckabschnitt, der zuletzt auf das Werkstück auftrifft, aufweist.

2. Befestigungselement nach Anspruch 1, bei dem die Stanzspitze (9) eine kreiszylindrische Außenkontur aufweist.

3. Befestigungselement nach **Anspruch 1 oder 2**, mit
3.1 einem zwischen der Stanzspitze (9) und dem Befestigungselementkörper (1) angeordneten Übergangsabschnitt (10), wobei
3.2 der Querschnitt der Stanzspitze (9) kleiner ist als der Querschnitt des Befestigungselementkörpers (1).

4. Befestigungselement nach Anspruch 3, bei dem der Übergangsabschnitt (10) mindestens teilweise konisch oder konkav verläuft.

5. Befestigungselement nach Anspruch 3 oder 4, bei dem der Übergangsabschnitt (10) mindestens teilweise ballistisch ausgebildet ist.

6. Befestigungselement nach einem der vorhergehenden Ansprüche, bei dem der Stanzabschnitt und/oder der Druckabschnitt der Stirnfläche (5) jeweils eben ausgebildet sind und jeweils schräg zur Längsachse des Befestigungselements verlaufen, insbesondere unter verschiedenen Winkeln.

7. Befestigungselement nach einem der vorhergehenden Ansprüche, mit mindestens einer die Stirnfläche (15) teilenden, an ihren beiden Enden in die Umfangskante (11) übergehenden Schneidkante (14).

8. Befestigungselement nach Anspruch 9, bei dem die Schneidkante (14) senkrecht oder schräg zur Längsachse des Befestigungselements verläuft.

9. Befestigungselement nach Anspruch 7 oder 8, bei dem die Schneidkante (14) geradlinig oder gebogen ausgebildet ist.

10. Befestigungselement nach einem der Ansprüche 7 bis 9, bei dem die Schneidkante (14) durch die Mittelachse des Befestigungselements verläuft.

11. Befestigungselement nach einem der vorhergehenden Ansprüche, bei dem die Umfangskante (11) in Stirnansicht gesehen längs einer geschlossenen Kreislinie verläuft.

12. Befestigungselement nach einem der vorhergehenden Ansprüche, bei dem der Befestigungselementkörper als Schraube ausgebildet ist.

13. Befestigungselement nach einem der vorhergehenden Ansprüche 1 bis 11, bei dem der Befestigungselementkörper als Nietkörper ausgebildet ist.

## Claims

1. A fastening element to be driven in, with
1.1 a fastening element body (1), which
1.2 has a head (2) with an abutment shoulder (3) on its lower face, and with
1.3 a punch tip (9) forming the front end of the fastening element, and having a cylindrical outer contour, which
1.4 has an end face (5),
1.5 the peripheral edge (11) of which is formed by a line of intersection between the end face (5) and the cylindrical outer contour of the punch tip (9),
**characterised in that**,
1.6 the end face (5) has a punch section, which firstly impinges onto a workpiece, and
1.7 a compression section, which lastly impinges onto the workpiece.

2. The fastening element in accordance with claim 1, in which the punch tip (9) has a circular cylindrical outer contour.

3. The fastening element in accordance with claim 1 or 2, with
3.1 a transition section (10) arranged between the punch tip (9) and the fastening element body (1),
3.2 the cross-section of the punch tip (9) is smaller than the cross-section of the fastening element body (1).

4. The fastening element in accordance with claim 3, in which the transition section (10) runs at least partly in a conical or concave manner.

5. The fastening element in accordance with claim 3 or 4, in which the transition section (10) is designed at least partly in a ballistic manner.

6. The fastening element in accordance with one of the preceding claims, in which the punch section and/or the compression section of the end face (5) are in each case designed to be plane, and in each case run obliquely to the longitudinal axis of the fastening element, in particular at different angles.

7. The fastening element in accordance with one of the preceding claims, with at least one cutting edge (14) dividing the end face (15) and at both its ends transitioning into the peripheral edge (11).

8. The fastening element in accordance with claim 9, in which the cutting-edge (14) runs at right angles or obliquely to the longitudinal axis of the fastening element.

9. The fastening element in accordance with claim 7 or 8, in which the cutting edge (14) is designed to be straight or curved.

10. The fastening element in accordance with one of the claims 7 to 9, in which the cutting edge (14) runs through the central axis of the fastening element.

11. The fastening element in accordance with one of the preceding claims, in which the peripheral edge (11), as seen in an end view, runs along a closed circular line.

12. The fastening element in accordance with one of the preceding claims, in which the fastening element body is designed as a screw.

13. The fastening element in accordance with one of the preceding claims 1 to 11, in which the fastening element body is designed as a rivet body.

## Revendications

1. Élément de fixation à enfoncer, avec
1.1 un corps (1) d'élément de fixation, lequel
1.2 comporte une tête (2) avec un épaulement d'appui (3) sur sa face inférieure et avec
1.3 une pointe poinçonneuse (9) formant l'extrémité antérieure de l'élément de fixation, présentant un contour extérieur cylindrique, laquelle
1.4 comporte un face frontale (5)
1.5 dont l'arête périphérique (11) est formée par une ligne de coupe entre la face frontale (5) et le contour extérieur cylindrique de la pointe poinçonneuse (9),
**caractérisé en ce que**
1.6 la face frontale (5) comporte un tronçon poinçonneur qui est incident en premier lieu sur une pièce d'oeuvre et
1.7 un tronçon de pression qui est incident en dernier lieu sur la pièce d'oeuvre.

2. Élément de fixation selon la revendication 1, sur lequel la pointe poinçonneuse (9) présente un contour extérieur cylindrique circulaire.

3. Élément de fixation selon la revendication 1 ou la revendication 2, avec
3.1 un tronçon de transition (10) placé entre la pointe poinçonneuse (9) et le corps (1) de l'élément de fixation,
3.2 la section transversale de la pointe poinçonneuse (9) étant inférieure à la section transversale du corps (1) de l'élément de fixation.

4. Élément de fixation selon la revendication 3, sur lequel le tronçon de transition (10) s'étend au moins en partie sous forme de conique ou sous forme concave.

5. Élément de fixation selon la revendication 3 ou la revendication 4, sur lequel le tronçon de transition (10) est conçu au moins en partie sous forme balistique.

6. Élément de fixation selon l'une quelconque des revendications précédentes, sur lequel le tronçon poinçonneur et/ou le tronçon de pression de la face frontale (5) sont conçus chacun en étant plans et s'étendent chacun en oblique vers l'axe longitudinal de l'élément de fixation, notamment sous différents angles.

7. Élément de fixation selon l'une quelconque des revendications précédentes, avec au moins une arête de coupe (14) divisant la face frontale (15), passant par ses deux extrémités dans l'arête périphérique (11).

8. Élément de fixation selon la revendication 9, sur lequel l'arête de coupe (14) s'étend à la perpendiculaire ou en oblique par rapport à l'axe longitudinal de l'élément de fixation.

9. Élément de fixation selon la revendication 7 ou la revendication 8, sur lequel l'arête de coupe (14) est conçue sous forme rectiligne ou curviligne.

10. Élément de fixation selon l'une quelconque des revendications 7 à 9, sur lequel l'arête de coupe (14) s'étend à travers l'axe médian de l'élément de fixation.

11. Élément de fixation selon l'une quelconque des revendications précédentes, sur lequel, considérée en vue frontale, l'arête périphérique (11) s'étend le long d'une ligne circulaire fermée.

12. Élément de fixation selon l'une quelconque des revendications précédentes, sur lequel le corps de l'élément de fixation est conçu en tant que vis.

13. Élément de fixation selon l'une quelconque des revendications 1 à 11 précédentes, sur lequel le corps de l'élément de fixation est conçu en tant que corps de rivet.
